# EUROPÄISCHE PATENTSCHRIFT

(11) **EP 3 224 926 B1**
(45) Veröffentlichungstag und Bekanntmachung des Hinweises auf die Patenterteilung: **04.12.2019**
(21) Anmeldenummer: 15767089.4
(22) Anmeldetag: 16.09.2015
(51) Int. Cl.: H02J 7/02, H02J 5/00, H02J 7/00, H02J 50/10, B60L 53/12, B60L 53/39

(54) **VERFAHREN UND SYSTEM ZUM BETREIBEN EINER LADESTATION ZUR INDUKTIVEN ÜBERTRAGUNG ELEKTRISCHER ENERGIE AN EIN FAHRZEUG MIT ENERGIESPEICHER**
METHOD AND SYSTEM FOR OPERATING A CHARGING STATION FOR INDUCTIVE TRANSMISSION OF ELECTRICAL ENERGY TO A VEHICLE WITH AN ENERGY STORAGE MEANS
PROCÉDÉ ET SYSTÈME D'EXPLOITATION D'UNE STATION DE CHARGE POUR LA TRANSMISSION INDUCTIVE D'ÉNERGIE ÉLECTRIQUE À UN VÉHICULE AVEC ACCUMULATEUR D'ÉNERGIE

(30) Priorität: 28.11.2014 DE 102014017541
(43) Veröffentlichungstag der Anmeldung: 04.10.2017
(73) Patentinhaber: SEW-EURODRIVE GmbH & Co. KG, 76646 Bruchsal (DE)
(72) Erfinder: WANJEK, Andreas, 68753 Waghäusel (DE)
(86) Internationale Anmeldenummer: PCT/EP2015/001851
(87) Internationale Veröffentlichungsnummer: WO 2016/082901

(56) Entgegenhaltungen:
- US-A1- 2014 055 090
- US-A1- 2014 232 331

## Beschreibung

Die Erfindung betrifft ein Verfahren und System zum Betreiben einer Ladestation zur induktiven Übertragung elektrischer Energie an ein Fahrzeug mit Energiespeicher.

Aus der DE 10 2012 010 014 B3 ist bekannt, die induktiven Kopplungsstärken zwischen Teilwicklungen von Kommunikationsspulen zu bestimmen und dies für eine Positionierung eines Fahrzeugs zu benutzen.

Aus der US 2014/0232331 A1 ist als nächstliegender Stand der Technik ein berührungslos mit elektrischer Energie aufladbares Elektrofahrzeug gezeigt.

Der Erfindung liegt daher die Aufgabe zugrunde, ein Verfahren zum Betreiben einer Ladestation zur induktiven Übertragung elektrischer Energie an ein Fahrzeug mit Energiespeicher weiterzubilden, wobei ein einfaches Einparken und Beladen ausführbar sein soll.

Erfindungsgemäß wird die Aufgabe bei dem Verfahren nach den in Anspruch 1 und bei dem System nach den in Anspruch 9 angegebenen Merkmalen gelöst.

Wichtige Merkmale der Erfindung bei dem Verfahren zum Betreiben einer Ladestation zur induktiven Übertragung elektrischer Energie an ein Fahrzeug mit Energiespeicher sind, dass eine Primärwicklung aus zwei gegensinnig gewickelten Teilwicklungen zusammengesetzt ist,
wobei die Primärwicklung eben, insbesondere Flachwicklung, ausgeführt ist,
wobei eine zur Primärwicklung parallel angeordnete Wicklung zur Datenübertragung vorgesehen ist,
wobei die Wicklung zwei Teilwicklungen aufweist, die abhängig von der Schalterstellung einer Schalteranordnung, insbesondere also abhängig von der Schalterstellung eines Umpolschalters, gleichsinnig oder gegensinnig betreibbar sind,
wobei bei unbestromter Primärwicklung die Teilwicklungen gegensinnig und bei bestromter Primärwicklung die Teilwicklungen gleichsinnig betrieben werden.

Von Vorteil ist dabei, dass bei unbestromter Primärwicklung ein Bestimmen der Position des Fahrzeugs unter Verwendung der Wicklungen in einfacher Weise ermöglicht ist. Denn es müssen nur die induktiven Kopplungsstärken zwischen einer jeweiligen Teilwicklung und einer jeweiligen sekundärseitig angeordneten entsprechenden Teilwicklung sowie die induktive Kopplungsstärke der jeweiligen Wicklung zu der jeweiligen sekundärseitig entsprechenden Wicklung bestimmt werden. Aus diesen Werten der Kopplungsstärke ist dann eine zumindest grobe Bestimmung der Position und/oder Ausrichtung des Fahrzeugs ausführbar und mittels der bestimmten Position ein Einparken auf die Position optimaler induktiver Kopplung zwischen Sekundärwicklung und Primärwicklung unterstützbar. Denn durch Anzeigen der Position ist dem Fahrer des Fahrzeugs ein Finden der optimalen Position in einfacher Weise ermöglicht. Alternativ ist sogar ein automatisches oder zumindest halbautomatisches Einparken ausführbar, indem die bestimmte Position einem Regler zugeführt wird, der das Fahrzeug auf die optimale Position hinführt, indem er den Lenkwinkel des Fahrzeugs steuert. Mittels der Wicklungen ist außerdem auch eine Datenübertragung, also Signalübertragung zur Kommunikation, ermöglicht. Hierzu ist dann jeweils eine der Wicklungen als Sender und die sekundärseitig, also fahrzeugseitig, entsprechende Wicklung als Empfänger verwendbar. Umgekehrt ist auch eine Wicklung als Empfänger und die hierzu sekundärseitig, also fahrzeugseitig, entsprechende Wicklung als Sender verwendbar. In Weiterbildung sind auch primärseitig und/oder sekundärseitig Transceiver verwendbar, die mit der jeweiligen Wicklung verbunden sind. Nach Erreichen der optimalen Position ist die Primärwicklung bestrombar.

Bei einer vorteilhaften Ausgestaltung ist die senkrechte Projektion der ersten Teilwicklung der Wicklung in die Ebene der Primärwicklung von der ersten Teilwicklung der Primärwicklung umfasst und die senkrechte Projektion der zweiten Teilwicklung der Wicklung in die Ebene der Primärwicklung ist von der zweiten Teilwicklung der Primärwicklung umfasst. Von Vorteil ist dabei, dass bei Bestromung der Primärwicklung keine Spannung in der Wicklung induziert wird, weil die in den Teilwicklungen induzierten Einzelspannungen sich gegenseitig aufheben.

Bei einer vorteilhaften Ausgestaltung ist bei Bestromung der Primärwicklung
die von der ersten Teilwicklung der Primärwicklung in die erste Teilwicklung der Wicklung induzierte Spannung betragsgleich zur von der zweiten Teilwicklung der Primärwicklung in die zweite Teilwicklung der Wicklung induzierte Spannung. Von Vorteil ist dabei, dass wiederum keine Spannung in die Wicklung induziert wird bei Bestromung der Primärwicklung.

Bei einer vorteilhaften Ausgestaltung ist an der Unterseite des Fahrzeugs eine als ebene, insbesondere zur Primärwicklung parallele Wicklung ausgeführte Sekundärwicklung angeordnet, die aus zwei gegensinnig gewickelten Teilwicklungen besteht,
insbesondere wobei in der Position des Fahrzeugs mit optimaler induktiver Kopplung die senkrechte Projektion der von der ersten Teilwicklung umwickelten Fläche in die Wicklungsebene der Primärwicklung von der ersten Teilwicklung umfasst ist und die senkrechte Projektion der von der zweiten Teilwicklung umwickelten Fläche in die Wicklungsebene der Primärwicklung von der zweiten Teilwicklung der Primärwicklung umfasst ist. Von Vorteil ist dabei, dass zwar Primärwicklung und Sekundärwicklung beide aus zwei gegensinnig gewickelten Teilwicklungen zusammengesetzt sind, jedoch trotzdem eine hohe Leistung übertragbar ist, wenn das Fahrzeug möglichst genau in die optimale Position, also Position optimaler induktiver Kopplungsstärke zwischen Sekundärwicklung und Primärwicklung eingeparkt wird.

Bei einer vorteilhaften Ausgestaltung ist fahrzeugseitig ebenfalls eine zur Sekundwicklung parallel angeordnete Wicklung zur Datenübertragung vorgesehen,
wobei die Wicklung zwei Teilwicklungen aufweist, die abhängig von der Schalterstellung einer Schalteranordnung, insbesondere also abhängig von der Schalterstellung eines Umpolschalters, gleichsinnig oder gegensinnig betreibbar sind,
wobei bei unbestromter Sekundärwicklung die Teilwicklungen gegensinnig und bei bestromter Sekundärwicklung die Teilwicklungen gleichsinnig betrieben werden. Von Vorteil ist dabei, dass durch bloßes Ändern der Schalterstellung die Wicklung derart betreibbar ist, dass keine Spannung induziert wird. Bei unbestromter Primärwicklung induziert auch eine parallel angeordnete, um 90° gedrehte, gleichartig ausgeführte Wicklung keine Spannung, so dass beide Wicklungen unabhängig voneinander verwendbar sind zur Kommunikation oder Positionsbestimmung.

Wichtige Merkmale bei dem Verfahren zum Betreiben einer Ladestation zur induktiven Übertragung elektrischer Energie an ein Fahrzeug mit Energiespeicher sind, dass
eine Primärwicklung aus zwei gegensinnig gewickelten Teilwicklungen zusammengesetzt ist,
wobei die Primärwicklung eben, insbesondere Flachwicklung, ausgeführt ist,
**wobei** eine zur Primärwicklung parallel angeordnete Wicklung zur Datenübertragung vorgesehen ist,
wobei die Wicklung zwei gegensinnig gewickelte Teilwicklungen aufweist,
wobei eine zur Primärwicklung parallel angeordnete Zusatzwicklung zur Datenübertragung vorgesehen ist,
wobei die Überlappung, insbesondere der Überlappungsflächenbetrag, der senkrechten Projektion der Zusatzwicklung in die Ebene der Primärwicklung mit der ersten Teilwicklung der Primärwicklung betragsgleich ist mit der Überlappung, insbesondere der Überlappungsflächenbetrag, der senkrechten Projektion der Zusatzwicklung in die Ebene der Primärwicklung mit der zweiten Teilwicklung der Primärwicklung,
wobei bei unbestromter Primärwicklung die Wicklung verwendet wird zur Datenübertragung und/oder Bestimmung der relativen Position des Fahrzeugs zur Primärwicklung, insbesondere und die Zusatzwicklung nicht verwendet wird zur Datenübertragung,
wobei bei bestromter Primärwicklung die Zusatzwicklung verwendet wird zur Datenübertragung, insbesondere und die Wicklung nicht verwendet wird zur Datenübertragung. Von Vorteil ist dabei, dass mittels einer Schalteranordnung die Zusatzwicklung zugeschaltet wird oder nicht. Dies erfolgt dabei abhängig von der Bestromung oder Nicht-Bestromung der Primärwicklung. Somit ist bei Nichtbestromung die Positionierung und bei Bestromung die Kommunikation über die Zusatzwicklung ermöglicht. Die Zusatzwicklung ersetzt sozusagen funktional die aus gegensinnig gewickelten Teilwicklungen zusammengesetzte Wicklung.

Bei einer vorteilhaften Ausgestaltung wird bei unbestromter Primärwicklung eine weitere, zur Primärwicklung parallel angeordnete, aus zwei gegensinnig gewickelten Teilwicklungen zusammengesetzte weitere Wicklung verwendet zur Datenübertragung und/oder Bestimmung der relativen Position des Fahrzeugs zur Primärwicklung,
insbesondere wobei der Überlappungsflächenbetrag der senkrechten Projektion jeder Teilwicklung der weiteren Wicklung in die Ebene der Primärwicklung mit der ersten Teilwicklung der Primärwicklung betragsgleich ist mit dem Überlappungsflächenbetrag der senkrechten Projektion dieser jeweiligen Teilwicklung der weiteren Wicklung in die Ebene der Primärwicklung mit der zweiten Teilwicklung der Primärwicklung,

insbesondere wobei die weitere Wicklung um 90° gedreht angeordnet ist zur Wicklung,
insbesondere wobei diese weitere Wicklung auch verwendbar ist zur Datenübertragung bei bestromter Primärwicklung. Von Vorteil ist dabei, dass in jedem Fall eine Datenübertragung ausführbar ist.

Bei einer vorteilhaften Ausgestaltung ist die Zusatzwicklung als Rechteckspule ausgeführt. Von Vorteil ist dabei, dass eine gute Ausnutzung der zur Verfügung stehenden Fläche ausführbar ist und eine einfache Herstellung als Leiterplattenlayout ermöglicht ist.

Wichtige Merkmale bei dem System zur Durchführung eines vorgenannten Verfahrens sind, dass die Schalteranordnung derart eingerichtet ist, dass bei bestromter Primärwicklung die Schalteranordnung eine erste Schalterstellung aufweist und dass bei unbestromter Primärwicklung die Schalteranordnung eine andere Schalterstellung aufweist. Von Vorteil ist dabei, dass die Umschaltung in einfacher Weise ausführbar ist.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von Abbildungen näher erläutert:

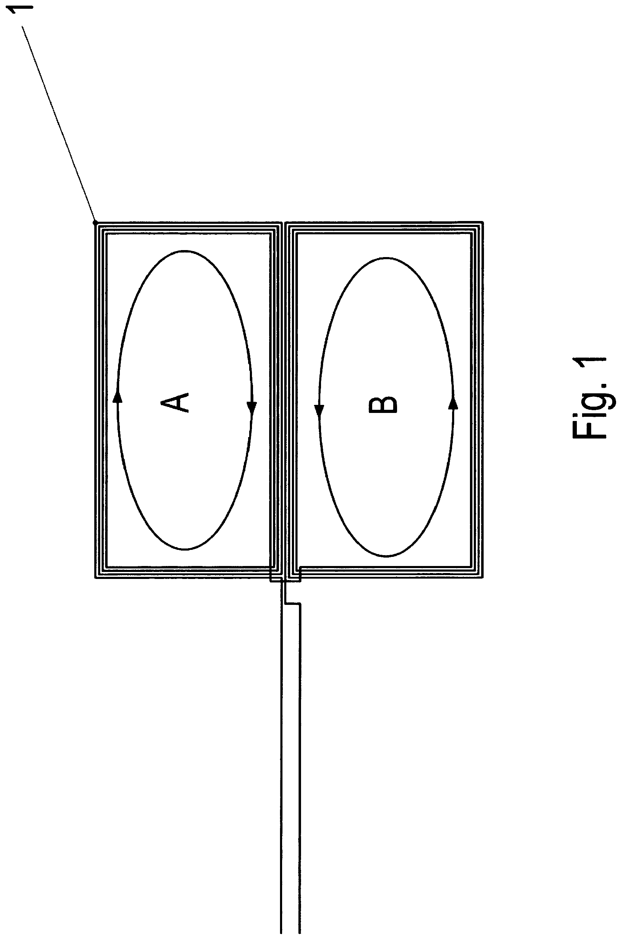

In der Figur 1 ist eine aus zwei gegensinnig gewickelten Teilwicklungen (A, B) zusammengesetzte Primärwicklung 1 einer erfindungsgemäßen Anordnung zur induktiven Übertragung elektrischer Energie an ein Fahrzeug gezeigt.
In der Figur 2 ist eine Wicklung zur Datenübertragung gezeigt, die aus zwei gegensinnig gewickelten Teilwicklungen 2 zusammengesetzt ist.
In der Figur 3 ist eine Wicklung zur Datenübertragung gezeigt, die aus zwei gleichsinnig gewickelten Teilwicklungen 3 zusammengesetzt ist.
In der Figur 4 ist eine Zusatzwicklung 4 gezeigt.
In der Figur 5 ist die aus den Teilwicklungen 3 zusammengesetzte Wicklung mit ihren Anschlüssen (53, 54, 55, 56) näher dargestellt.
In der Figur 6 ist die Ansteuerung 6 der aus den Teilwicklungen 3 zusammengesetzte Wicklung gezeigt.

Wie in den Figuren gezeigt, ist die Primärwicklung 1 am Boden angeordnet und aus zwei gegensinnig gewickelten Teilwicklungen (A, B), die als Flachwicklungen ausgeführt sind, der deren jeweilige umwickelte Fläche jeweils denselben Betrag aufweist und in derselben Ebene, also Bodenebene, angeordnet sind. Die Verfahrebene des Fahrzeugs ist parallel zur dieser Ebene ausgerichtet. An der Unterseite, also an der dem Boden zugewandten Seite des Fahrzeugs ist eine Sekundärspule angeordnet, die ebenfalls aus zwei gegensinnig gewickelten Teilwicklungen zusammengesetzt ist, deren jeweils umwickelte Fläche jeweils denselben Betrag aufweist.

Wird das Fahrzeug nun auf eine derartige Position verfahren, dass die Sekundärwicklung mittig zur Primärwicklung 1 angeordnet ist, wobei die senkrechte Projektion einer Teilwicklung der Sekundärwicklung in die Ebene nur in der umwickelten Fläche einer der Teilwicklungen A der Primärwicklung 1 angeordnet ist und die senkrechte Projektion der anderen Teilwicklung in die Ebene der Sekundärwicklung nur in der umwickelten Fläche der anderen Teilwicklung B der Primärwicklung 1 angeordnet ist.

Somit ist nach Erreichen dieser Position optimaler induktiver Kopplungsstärke zwischen Primärwicklung 1 und Sekundärwicklung elektrische Leistung ans Fahrzeug übertragbar. Hierbei wird ein mittelfrequenter Strom in die Primärwicklung 1 eingeprägt. Der Sekundärwicklung ist eine Kapazität in Reihe oder parallel zugeschaltet, wobei die Resonanzfrequenz des so gebildeten Schwingkreises im Wesentlichen der Frequenz des mittelfrequenten Stroms gleicht.

Mittels dieser resonanten Übertragung ist ein hoher Wirkungsgrad erreichbar - auch bei herstellungsbedingten oder ausrichtungsbedingten Abweichungen.

Zusätzlich zur genannten Leistungsübertragung ist auch ein Kommunikationskanal zwischen dem Fahrzeug und der stationären Seite ausgeführt. Hierzu sind ebene Wicklungen vorgesehen, die parallel zur Primärwicklung 1 angeordnet sind.

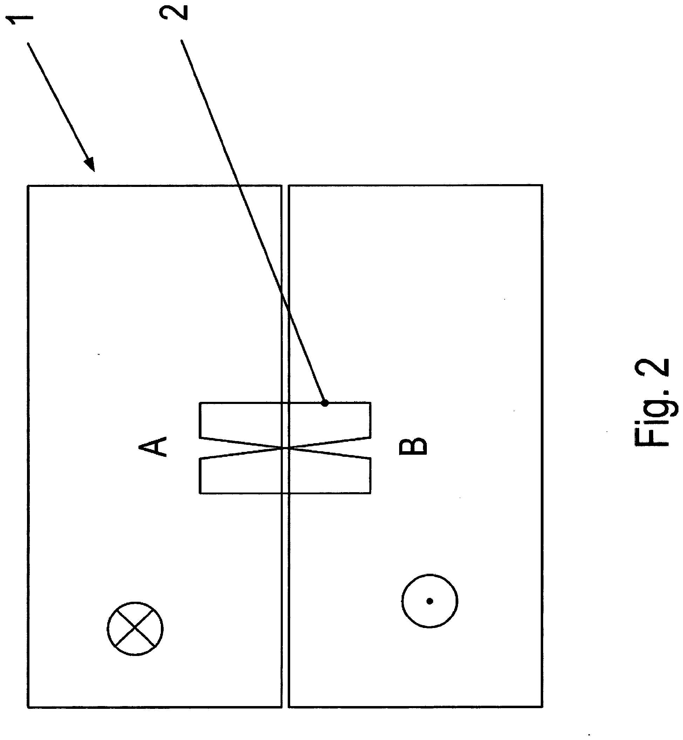

Wie in Figur 2 gezeigt, ist eine aus gegensinnig gewickelten Teilwicklungen zusammengesetzte Wicklung 2 parallel zur Primärwicklung 1 angeordnet. Jede der beiden Teilwicklungen ist zur Hälfte überdeckt von der ersten Teilwicklung der Primärwicklung 1 und die andere Hälfte von der anderen Teilwicklung der Primärwicklung 1.

Somit induziert der in die Primärwicklung 1 eingeprägte Strom insgesamt keine Spannung in der Wicklung 2.

Die an der Unterseite des Fahrzeugs angeordnete Sekundärwicklung ist ebenso wie die Primärwicklung 1 ausgeführt und parallel zu dieser angeordnet. Zur Kommunikation ist auch fahrzeugseitig eine der Figur 2 entsprechende Wicklung angeordnet, die ebenso wie die Wicklung 2 aus zwei gegensinnig gewickelten Teilwicklungen besteht, welche jeweils zur Hälfte von einer der Teilwicklungen der Sekundärwicklung überdeckt werden.

Somit ist also eine Kommunikation zwischen der Wicklung 2 und der fahrzeugseitigen entsprechenden Wicklung möglich - unbeeinflusst von dem von der Primärwicklung 1 erzeugten Magnetfeld. Denn wenn das Fahrzeug und somit die Sekundärwicklung so ausgerichtet ist, dass die erste Teilwicklung A der Primärwicklung 1 die erste Teilwicklung der Sekundärwicklung überdeckt, also die senkrechte Projektion der ersten Teilwicklung der Sekundärwicklung in die Wicklungsebene der Primärwicklung 1 von der ersten Teilwicklung A der Primärwicklung 1 vollständig umfasst, ist und ebenso die zweite Teilwicklung B der Primärwicklung 1 die zweite Teilwicklung der Sekundärwicklung überdeckt, also die senkrechte Projektion der zweiten Teilwicklung der Sekundärwicklung in die Wicklungsebene der Primärwicklung 1 von der zweiten Teilwicklung B der Primärwicklung 1 vollständig umfasst, dann sind die Wicklungen 2 zur Kommunikation optimal induktiv gekoppelt, da ihre senkrechten Projektionen in die Wicklungsebene zusammenfallen. Dabei stört das von der Primärwicklung 1 erzeugte Magnetfeld nicht, da die insgesamt in der Wicklung 2 beziehungsweise in der fahrzeugseitigen entsprechenden Wicklung induzierte Spannung verschwindet infolge der jeweils gegensinnig gewickelten Teilwicklungen.

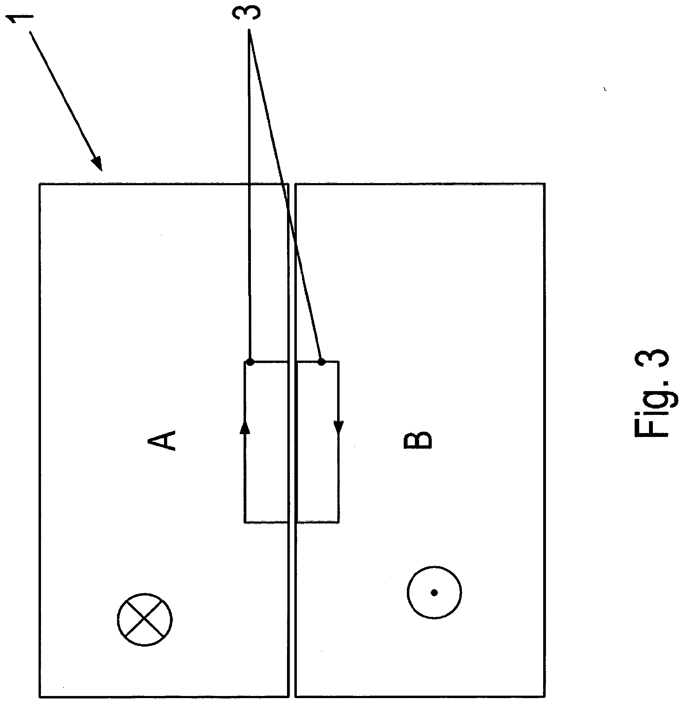

Wie in Figur 3 gezeigt, ist an der Primärwicklung 1 eine weitere Wicklung 3 zur Kommunikation angeordnet, die aus gleichsinnig gewickelten Teilwicklungen zusammengesetzt ist. Dabei ist jedoch die erste Teilwicklung der Wicklung 3 derart angeordnet, dass die senkrechte Projektion in die Wicklungsebene der Primärwicklung 1 vollständig innerhalb einer ersten Teilwicklung A der Primärwicklung 1 liegt, also von ihr umfasst ist. Ebenso ist die zweite Teilwicklung der Wicklung 3 derart angeordnet, dass die senkrechte Projektion in die Wicklungsebene der Primärwicklung 1 vollständig innerhalb der zweiten Teilwicklung B der Primärwicklung 1 liegt, also von ihr umfasst ist.

Somit induziert wiederum das von der Primärwicklung erzeugte Magnetfeld insgesamt keine Spannung an der Wicklung 3, weil die an der ersten Teilwicklung der Wicklung 3 induzierte Spannung betragsgleich aber mit entgegengesetztem Vorzeichen ausgebildet ist zu der an der zweiten Teilwicklung der Wicklung 3 induzierten Spannung.

Auch fahrzeugseitig ist eine solche Wicklung vorgesehen, deren erste Teilwicklung derart angeordnet, dass die senkrechte Projektion in die Wicklungsebene der Sekundärwicklung vollständig innerhalb einer ersten Teilwicklung der Sekundärwicklung liegt, also von ihr umfasst ist. Ebenso ist die zweite Teilwicklung der Wicklung derart angeordnet, dass die senkrechte Projektion in die Wicklungsebene der Sekundärwicklung vollständig innerhalb der zweiten Teilwicklung der Sekundärwicklung liegt, also von ihr umfasst ist.

Somit induziert wiederum das von der Primärwicklung erzeugte Magnetfeld insgesamt keine Spannung an dieser fahrzeugseitigen Wicklung, weil die an der ersten Teilwicklung der Wicklung induzierte Spannung betragsgleich aber mit entgegengesetztem Vorzeichen ausgebildet ist zu der an der zweiten Teilwicklung der Wicklung induzierten Spannung.

Die Wicklung 2 nach Figur 2 ist insgesamt rechteckförmig ausgebildet. Die Wicklung 3 nach Figur 3 ist hierzu senkrecht ausgerichtet. Somit induziert ein an die Wicklung 2 angelegter Wechselstrom keine Spannung in der Wicklung 3. Dies gilt auch umgekehrt.

Auf diese Weise ist eine bidirektionale ungestörte Kommunikation ausführbar, also ein Hinkanal von Wicklung 2 als Sender zur entsprechenden fahrzeugseitigen Wicklung als Empfänger und ein Rückkanal von der der Wicklung 3 entsprechenden fahrzeugseitigen Wicklung als Sender zur Wicklung 3 als Empfänger.

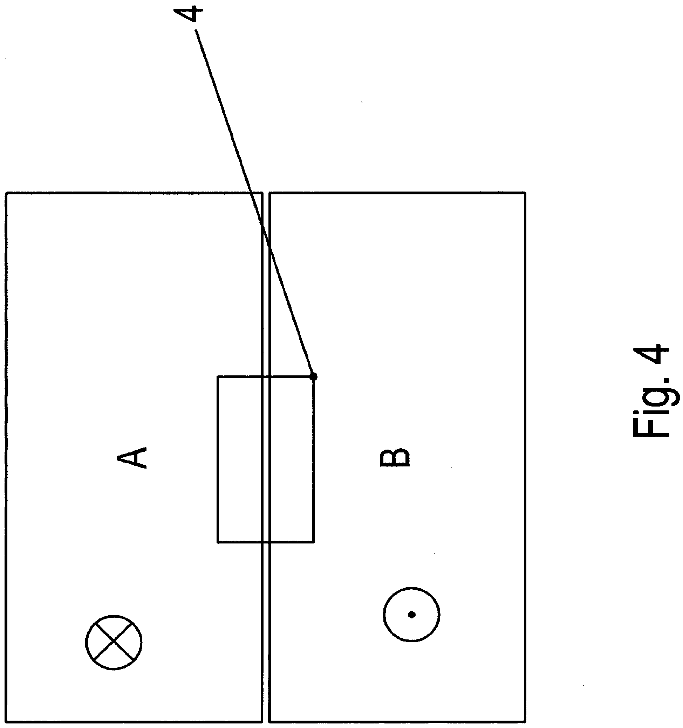

Alternativ zur Wicklung 3 der Figur 3 ist auch eine ungeteilte Wicklung 4 gemäß Figur 4 verwendbar. Hierbei ist die Hälfte der Fläche der senkrechten Projektion der Wicklung 4 in die Wicklungsebene von der ersten Teilwicklung A der Primärwicklung 1 umfasst und die andere Hälfte von der anderen Teilwicklung B der Primärwicklung 1.

Somit ist eine von dem von der Primärwicklung 1 erzeugten Wechselmagnetfeld unabhängige Kommunikation von Wicklung 4 zu einer entsprechenden fahrzeugseitigen Wicklung ermöglicht. Denn diese ist entweder gemäß der Beschreibung zur Figur 3 ausgeführt oder wiederum ungeteilt, wobei die Hälfte der Fläche der senkrechten Projektion dieser Wicklung in die Wicklungsebene von der ersten Teilwicklung der Sekundärwicklung umfasst ist und die andere Hälfte von der anderen Teilwicklung der Sekundärwicklung.

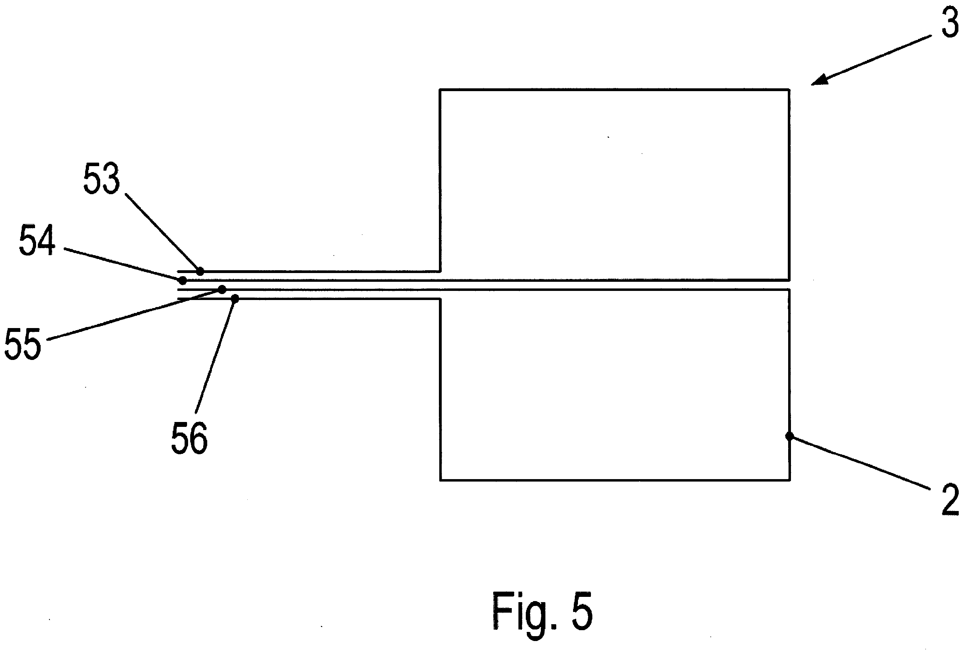

Wie in Figur 5 gezeigt, weist die Wicklung 3 einen ersten Anschluss 53 der ersten Teilwicklung der Wicklung 3 und einen zweiten Anschluss 54 der ersten Teilwicklung der Wicklung 3 auf sowie einen ersten Anschluss 55 der zweiten Teilwicklung der Wicklung 3 und einen zweiten Anschluss 56 der zweiten Teilwicklung der Wicklung 3 auf.

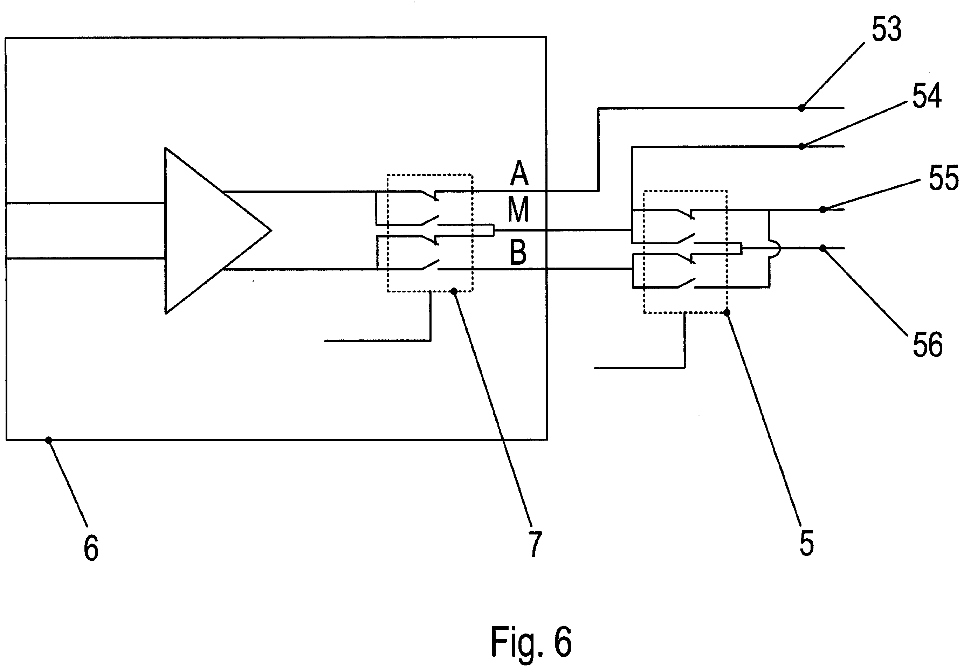

Wie in Figur 6 dargestellt wird eine Spannung gemäß der Schalterstellungen eines Wechselschalters 7 und eines Umpolschalters 5 den jeweiligen Anschlüssen (53, 54, 55, 56) zugeführt.

Solange die Primärwicklung unbestromt ist und beispielswiese das Fahrzeug sich noch erst annähert an die Primärwicklung, ist eine Positionierung des Fahrzeugs ausführbar, indem die induktiven Kopplungsstärken der einzelnen Teilwicklungen zueinander bestimmt werden. Hierzu wird nicht nur die Wicklung 2 sondern auch die Wicklung 3 verwendet, wobei die Ansteuerung 6 beziehungsweise die Schalterstellungen der Schalter (5, 7) derart gewählt wird, dass die Teilwicklungen der Wicklung 3 gegensinnig verwendet sind.

Durch Bestimmen der Kopplungsstärken, also beispielsweise der
- Kopplungsstärke von der ersten Teilwicklung der Wicklung 2 zu der ersten Teilwicklung der fahrzeugseitig angeordneten entsprechenden Wicklung und der
- Kopplungsstärke von der ersten Teilwicklung der Wicklung 2 zu der zweiten Teilwicklung der fahrzeugseitig angeordneten entsprechenden Wicklung und der
- Kopplungsstärke von der zweiten Teilwicklung der Wicklung 2 zu der ersten Teilwicklung der fahrzeugseitig angeordneten entsprechenden Wicklung und der
- Kopplungsstärke von der zweiten Teilwicklung der Wicklung 2 zu der zweiten Teilwicklung der fahrzeugseitig angeordneten entsprechenden Wicklung,
und auch
- der Kopplungsstärke von der gesamten Wicklung 2 zu der ersten Teilwicklung der fahrzeugseitig angeordneten entsprechenden Wicklung und der
- der Kopplungsstärke von der gesamten Wicklung 2 zu der zweiten Teilwicklung der fahrzeugseitig angeordneten entsprechenden Wicklung und der
- der Kopplungsstärke von der gesamten Wicklung 2 zu der gesamten fahrzeugseitig angeordneten entsprechenden Wicklung,
ist eine Bestimmung der Position und/oder Ausrichtung des Fahrzeugs ermöglicht.

Auch eine Kommunikation, also ein Austausch von Daten ist ermöglicht.

Nach Einparken des Fahrzeugs in der Position der stärksten induktiven Kopplung zwischen Primärwicklung 1 und Sekundärwicklung, also bei Erreichen derjenigen Position, bei welcher die senkrechte Projektion der ersten Teilwicklung der Sekundärwicklung von der ersten Teilwicklung A der Primärwicklung umfasst ist und bei welcher die senkrechte Projektion der zweiten Teilwicklung der Sekundärwicklung von der zweiten Teilwicklung B der Primärwicklung umfasst ist, wird die Primärwicklung bestromt.

Da dann das von der Primärwicklung erzeugte Wechselmagnetfeld in die Wicklung 3 Spannung induziert, wobei die in die Teilwicklungen der Wicklung 3 induzierten Spannungen sich addieren, wird die Schalterstellung geändert, so dass die Teilwicklungen der Wicklung 3 gleichsinnig geschaltet sind und somit die von der Primärwicklung 1 in die Teilwicklungen der Wicklung 3 induzierten Spannungen sich aufheben. Nur das von der entsprechenden fahrzeugseitig angeordneten Wicklung erzeugte Wechselmagnetfeld induziert dann eine nicht verschwindende Spannung in der Wicklung 3. Dabei ist die entsprechende fahrzeugseitig angeordnete Wicklung ebenfalls gleichsinnig betrieben. Vorzugsweise ist also die Ansteuerung 6 mit Schaltern 5 und 7 auch fahrzeugseitig vorgesehen.

Wicklung 2 und Wicklung 3 sind zueinander senkrecht angeordnet.

Die Wicklungen (2, 3, 4) sind vorzugsweise als Leiterplattenlayout ausgeführt.

Bei einem weiteren erfindungsgemäßen Ausführungsbeispiel wird statt der Wicklung 3 die ungeteilt ausgeführte Rechteckspule verwendet.

Bei einem weiteren erfindungsgemäßen Ausführungsbeispiel wird zusätzlich zur Wicklung 2 und Wicklung 3 zusätzlich die ungeteilt ausgeführte Rechteckspule 4 verwendet.

Somit wird bei unbestromter Primärwicklung 1 nur Wicklung 2 und Wicklung 3 zur Bestimmung der Position des Fahrzeugs verwendet. Bei Bestromung der Primärwicklung 1 wird die ungeteilte Rechteckspule 4 zur Datenübertragung verwendet. Denn in der geteilten Wicklung 3 wird von der bestromten Primärwicklung 1 eine hohe Spannung induziert, so dass diese Wicklung 3 nicht für Datenaustausch verwendbar ist. Da die Rechteckspule 4 mit beiden Teilwicklungen der Primärwicklung 1 überlappt, so dass von der bestromten Primärwicklung 1 keine Spannung in die Rechteckspule 4 induziert wird, ist eine Datenübertragung von der Rechteckspule 4 aus zu einer entsprechenden fahrzeugseitig angeordneten Rechteckespule ermöglicht, die ebenfalls mit den gegensinnig gewickelten Teilwicklungen der Sekundärwicklung überlappt, so dass keine Spannung in ihr induziert wird.

### Bezugszeichenliste

1 Primärwicklung
2 aus gegensinnig gewickelten Teilwicklungen zusammengesetzte Wicklung
3 aus gleichsinnig gewickelten Teilwicklungen zusammengesetzte Wicklung
4 ungeteilt ausgeführte Zusatzwicklung
5 Umpolschalter
6 Ansteuerung
7 Wechselschalter
53 erster Anschluss der ersten Teilwicklung der Wicklung 3
54 zweiter Anschluss der ersten Teilwicklung der Wicklung 3
55 erster Anschluss der zweiten Teilwicklung der Wicklung 3
56 zweiter Anschluss der zweiten Teilwicklung der Wicklung 3

## Patentansprüche

1. Verfahren zum Betreiben einer Ladestation zur induktiven Übertragung elektrischer Energie an ein Fahrzeug mit Energiespeicher,
wobei eine Primärwicklung (1) aus zwei gegensinnig gewickelten Teilwicklungen (A, B) zusammengesetzt ist,
wobei die Primärwicklung (1) eben, insbesondere als Flachwicklung, ausgeführt ist,
**dadurch gekennzeichnet, dass**
eine zur Primärwicklung (1) parallel angeordnete Wicklung (3) zur Datenübertragung vorgesehen ist,
wobei die Wicklung (3) zwei Teilwicklungen aufweist, die abhängig von der Schalterstellung einer Schalteranordnung (5, 7), insbesondere also abhängig von der Schalterstellung eines Umpolschalters (5), gleichsinnig oder gegensinnig betreibbar sind,
wobei bei unbestromter Primärwicklung (1) die Teilwicklungen der Wicklung (3) gegensinnig und bei bestromter Primärwicklung (1) die Teilwicklungen der Wicklung (3) gleichsinnig betrieben werden.

2. Verfahren nach Anspruch 1,
**dadurch gekennzeichnet, dass**
die senkrechte Projektion der ersten Teilwicklung der Wicklung (3) in die Ebene der Primärwicklung von der ersten Teilwicklung der Primärwicklung umfasst ist und
die senkrechte Projektion der zweiten Teilwicklung der Wicklung (3) in die Ebene der Primärwicklung von der zweiten Teilwicklung der Primärwicklung umfasst ist.

3. Verfahren nach mindestens einem der vorangegangenen Ansprüche,
**dadurch gekennzeichnet, dass**
bei Bestromung der Primärwicklung
die von der ersten Teilwicklung der Primärwicklung in die erste Teilwicklung der Wicklung (3) induzierte Spannung betragsgleich ist zur von der zweiten Teilwicklung der Primärwicklung in die zweite Teilwicklung der Wicklung (3) induzierte Spannung.

4. Verfahren nach mindestens einem der vorangegangenen Ansprüche,
**dadurch gekennzeichnet, dass**
an der Unterseite des Fahrzeugs eine als ebene, insbesondere zur Primärwicklung parallele Wicklung ausgeführte Sekundärwicklung angeordnet ist, die aus zwei gegensinnig gewickelten Teilwicklungen besteht,
insbesondere wobei in der Position des Fahrzeugs mit optimaler induktiver Kopplung die senkrechte Projektion der von der ersten Teilwicklung umwickelten Fläche in die Wicklungsebene der Primärwicklung von der ersten Teilwicklung umfasst ist und die senkrechte Projektion der von der zweiten Teilwicklung umwickelten Fläche in die Wicklungsebene der Primärwicklung von der zweiten Teilwicklung der Primärwicklung umfasst ist.

5. Verfahren nach mindestens einem der vorangegangenen Ansprüche,
**dadurch gekennzeichnet, dass**
fahrzeugseitig ebenfalls eine zur Sekundwicklung parallel angeordnete Wicklung (3) zur Datenübertragung vorgesehen ist,
wobei die Wicklung (3) zwei Teilwicklungen aufweist, die abhängig von der Schalterstellung einer Schalteranordnung, insbesondere also abhängig von der Schalterstellung eines Umpolschalters, gleichsinnig oder gegensinnig betreibbar sind,
wobei bei unbestromter Sekundärwicklung die Teilwicklungen gegensinnig und bei bestromter Sekundärwicklung die Teilwicklungen gleichsinnig betrieben werden.

6. Verfahren zum Betreiben einer Ladestation zur induktiven Übertragung elektrischer Energie an ein Fahrzeug mit Energiespeicher,
wobei eine Primärwicklung (1) aus zwei gegensinnig gewickelten Teilwicklungen (A, B) zusammengesetzt ist,
wobei die Primärwicklung (1) eben, insbesondere als Flachwicklung, ausgeführt ist,
**dadurch gekennzeichnet, dass**
eine zur Primärwicklung (1) parallel angeordnete Wicklung (3) zur Datenübertragung vorgesehen ist,
wobei die Wicklung (3) zwei gegensinnig gewickelte Teilwicklungen (2) aufweist,
wobei eine zur Primärwicklung (1) parallel angeordnete Zusatzwicklung (4) zur Datenübertragung vorgesehen ist,
wobei die Überlappung, insbesondere der Überlappungsflächenbetrag, der senkrechten Projektion der Zusatzwicklung (4) in die Ebene der Primärwicklung (1) mit der ersten Teilwicklung (A) der Primärwicklung (1) betragsgleich ist mit der Überlappung, insbesondere der Überlappungsflächenbetrag, der senkrechten Projektion der Zusatzwicklung (4) in die Ebene der Primärwicklung (1) mit der zweiten Teilwicklung (B) der Primärwicklung, (1) wobei bei unbestromter Primärwicklung (1) die Wicklung (3) verwendet wird zur Datenübertragung und/oder Bestimmung der relativen Position des Fahrzeugs zur Primärwicklung, und die Zusatzwicklung (4) nicht verwendet wird zur Datenübertragung,
wobei bei bestromter Primärwicklung (1) die Zusatzwicklung (4) verwendet wird zur Datenübertragung, und die Wicklung (3) nicht verwendet wird zur Datenübertragung.

7. Verfahren nach Anspruch 6,
**dadurch gekennzeichnet, dass**
bei unbestromter Primärwicklung eine weitere, zur Primärwicklung parallel angeordnete, aus zwei gegensinnig gewickelten Teilwicklungen zusammengesetzte weitere Wicklung (2) verwendet wird zur Datenübertragung und/oder Bestimmung der relativen Position des Fahrzeugs zur Primärwicklung,
insbesondere wobei der Überlappungsflächenbetrag der senkrechten Projektion jeder Teilwicklung der weiteren Wicklung (2) in die Ebene der Primärwicklung mit der ersten Teilwicklung der Primärwicklung betragsgleich ist mit dem Überlappungsflächenbetrag der senkrechten Projektion dieser jeweiligen Teilwicklung der weiteren Wicklung (2) in die Ebene der Primärwicklung mit der zweiten Teilwicklung der Primärwicklung,
insbesondere wobei die weitere Wicklung (2) um 90° gedreht angeordnet ist zur Wicklung (3),
insbesondere wobei diese weitere Wicklung (2) auch verwendbar ist zur Datenübertragung bei bestromter Primärwicklung.

8. Verfahren nach Anspruch 6 oder 7,
**dadurch gekennzeichnet, dass**
die Zusatzwicklung (4) als Rechteckspule ausgeführt ist.

9. System eingerichtet zur Durchführung eines Verfahrens nach einem der Ansprüche 1 bis 5,
**dadurch gekennzeichnet, dass**
die Schalteranordnung derart eingerichtet ist, dass bei bestromter Primärwicklung die Schalteranordnung eine erste Schalterstellung aufweist und dass bei unbestromter Primärwicklung die Schalteranordnung eine andere Schalterstellung aufweist.

## Claims

1. Method for operating a charging station for inductively transmitting electrical energy to a vehicle having an energy storage device,
a primary winding (1) being composed of two sub-windings (A, B) wound in opposite directions,
the primary winding (1) being planar, in particular being configured as a flat winding,
**characterised in that**
a winding (3) arranged in parallel with the primary winding (1) is provided for data transmission,
the winding (3) having two sub-windings which can be operated in the same direction or in opposite directions depending on the switch position of a switch arrangement (5, 7), in particular therefore depending on the switch position of a polarity reversal switch (5),
the sub-windings of the winding (3) being operated in opposite directions when no current is applied to the primary winding (1) and the sub-windings of the winding (3) being operated in the same direction when current is applied to the primary winding (1).

2. Method according to claim 1,
**characterised in that**
the vertical projection of the first sub-winding of the winding (3) into the plane of the primary winding is encompassed by the first sub-winding of the primary winding and the vertical projection of the second sub-winding of the winding (3) into the plane of the primary winding is encompassed by the second sub-winding of the primary winding.

3. Method according to at least one of the preceding claims,
**characterised in that**
when current is applied to the primary winding, the voltage induced in the first sub-winding of the winding (3) by the first sub-winding of the primary winding is equal to the voltage induced in the second sub-winding of the winding (3) by the second sub-winding of the primary winding.

4. Method according to at least one of the preceding claims,
**characterised in that**
a secondary winding, configured as a planar winding, in particular as a winding parallel to the primary winding, and consisting of two sub-windings wound in opposite directions, is arranged on the underside of the vehicle,
in particular, when the vehicle is in the position with optimal inductive coupling, the vertical projection of the area encircled by the first sub-winding into the winding plane of the primary winding being encompassed by the first sub-winding and the vertical projection of the area encircled by the second sub-winding into the winding plane of the primary winding being encompassed by the second sub-winding of the primary winding.

5. Method according to at least one of the preceding claims,
**characterised in that**
a winding (3) arranged in parallel with the secondary winding is also provided on the vehicle for data transmission,
the winding (3) having two sub-windings which can be operated in the same direction or in opposite directions depending on the switch position of a switch arrangement, in particular therefore depending on the switch position of a polarity reversal switch,
the sub-windings being operated in opposite directions when no current is applied to the secondary winding and the sub-windings being operated in the same direction when current is applied to the secondary winding.

6. Method for operating a charging station for inductively transmitting electrical energy to a vehicle having an energy storage device,
a primary winding (1) being composed of two sub-windings (A, B) wound in opposite directions,
the primary winding (1) being planar, in particular being configured as a flat winding, **characterised in that**
a winding (3) arranged in parallel with the primary winding (1) is provided for data transmission,
the winding (3) having two sub-windings (2) wound in opposite directions,
an additional winding (4) arranged in parallel with the primary winding (1) being provided for data transmission,
the overlap, in particular the amount of area overlap, between the vertical projection of the additional winding (4) into the plane of the primary winding (1) and the first sub-winding (A) of the primary winding (1) being equal to the overlap, in particular the amount of area overlap, between the vertical projection of the additional winding (4) into the plane of the primary winding (1) and the second sub-winding (B) of the primary winding,
when no current is applied to the primary winding (1), the winding (3) being used for data transmission and/or for determining the relative position of the vehicle to the primary winding and the additional winding (4) not being used for data transmission,
when current is applied to the primary winding (1), the additional winding (4) being used for data transmission and the winding (3) not being used for data transmission.

7. Method according to claim 6,
**characterised in that**
when no current is applied to the primary winding, a further winding (2) arranged in parallel with the primary winding and composed of two sub-windings wound in opposite directions is used for data transmission and/or for determining the relative position of the vehicle to the primary winding,
in particular, the amount of area overlap between the vertical projection of each sub-winding of the further winding (2) into the plane of the primary winding and the first sub-winding of the primary winding being equal to the amount of area overlap between the vertical projection of said particular sub-winding of the further winding (2) into the plane of the primary winding and the second sub-winding of the primary winding,
the further winding (2) in particular being arranged in a manner rotated by 90° with respect to the winding (3),
said further winding (2) in particular also being able to be used for data transmission when current is applied to the primary winding.

8. Method according to either claim 6 or claim 7,
**characterised in that**
the additional winding (4) is configured as a rectangular coil.

9. System set up to carry out a method according to any of claims 1 to 5,
**characterised in that**
the switch arrangement is set up such that the switch arrangement has a first switch position when current is applied to the primary winding, and such that the switch arrangement has a different switch position when no current is applied to the primary winding.

## Revendications

1. Procédé d'exploitation d'une station de charge pour la transmission inductive d'énergie électrique à un véhicule à accumulateur d'énergie,
dans lequel un enroulement primaire (1) est composé de deux enroulements partiels (A, B) enroulés en sens opposés,
dans lequel l'enroulement primaire (1) est réalisé plan, en particulier sous la forme d'un enroulement plat,
**caractérisé en ce**
**qu'**un enroulement (3) disposé parallèlement à l'enroulement primaire (1) est prévu pour la transmission de données,
dans lequel l'enroulement (3) présente deux enroulements partiels qui peuvent être exploités dans le même sens ou en sens opposés en fonction de la position de commutation d'un dispositif de commutation (5, 7), en particulier en fonction de la position de commutation d'un commutateur inverseur de polarité (5),
dans lequel les enroulements partiels de l'enroulement (3) sont exploités en sens opposés lorsque l'enroulement primaire (1) n'est pas alimenté et les enroulements partiels de l'enroulement (3) sont exploités dans le même sens lorsque l'enroulement primaire (1) est alimenté.

2. Procédé selon la revendication 1,
**caractérisé en ce que**
la projection verticale du premier enroulement partiel de l'enroulement (3) dans le plan de l'enroulement primaire est incluse par le premier enroulement partiel de l'enroulement primaire et la projection verticale du deuxième enroulement partiel de l'enroulement (3) dans le plan de l'enroulement primaire est incluse par le deuxième enroulement partiel de l'enroulement primaire.

3. Procédé selon au moins l'une des revendications précédentes,
**caractérisé en ce que**,
lorsque l'enroulement primaire est alimenté, la tension induite par le premier enroulement partiel de l'enroulement primaire (3) est égale en valeur absolue à la tension induite par le deuxième enroulement partiel de l'enroulement primaire dans le deuxième enroulement partiel de l'enroulement (3).

4. Procédé selon au moins l'une des revendications précédentes,
**caractérisé en ce**
**qu'**un enroulement secondaire réalisé sous la forme d'un enroulement plan, en particulier parallèle à l'enroulement primaire, est disposé sur la face inférieure du véhicule, lequel enroulement secondaire est constitué de deux enroulements partiels enroulés en sens opposés,
en particulier dans lequel, dans la position du véhicule dans laquelle le couplage inductif est optimal, la projection verticale de la surface entourée par le premier enroulement partiel dans le plan d'enroulement de l'enroulement primaire est incluse par le premier enroulement partiel et la projection verticale de la surface entourée par le deuxième enroulement partiel dans le plan d'enroulement de l'enroulement primaire est incluse par le deuxième enroulement partiel de l'enroulement primaire.

5. Procédé selon au moins l'une des revendications précédentes,
**caractérisé en ce**
**qu'**un enroulement (3) disposé parallèlement à l'enroulement secondaire est également prévu côté véhicule pour la transmission de données,
dans lequel l'enroulement (3) présente deux enroulements partiels qui peuvent être exploités dans le même sens ou en sens opposés en fonction de la position de commutation d'un dispositif de commutation, en particulier en fonction de la position de commutation d'un commutateur inverseur de polarité,
dans lequel les enroulements partiels sont exploités en sens opposés lorsque l'enroulement secondaire n'est pas alimenté et dans le même sens lorsque l'enroulement secondaire est alimenté.

6. Procédé d'exploitation d'une station de charge pour la transmission inductive d'énergie électrique à un véhicule à accumulateur d'énergie,
dans lequel un enroulement primaire (1) est composé de deux enroulements partiels (A, B) enroulés en sens opposés,
dans lequel l'enroulement primaire (1) est réalisé plan, en particulier sous la forme d'un enroulement plat,
**caractérisé en ce**
**qu'**un enroulement (3) disposé parallèlement à l'enroulement primaire (1) est prévu pour la transmission de données,
dans lequel l'enroulement (3) présente deux enroulements partiels (2) enroulés en sens opposés,
dans lequel un enroulement supplémentaire (4) disposé parallèlement à l'enroulement primaire (1) est prévu pour la transmission de données,
dans lequel le chevauchement, en particulier la quantité de surface de chevauchement, de la projection verticale de l'enroulement supplémentaire (4) dans le plan de l'enroulement primaire (1) avec le premier enroulement partiel (A) de l'enroulement primaire (1) est égal(e) en valeur absolue au chevauchement, en particulier à la quantité de surface de chevauchement, de la projection verticale de l'enroulement supplémentaire (4) dans le plan de l'enroulement primaire (1) avec le deuxième enroulement partiel (B) de l'enroulement primaire (1),
dans lequel l'enroulement (3) est utilisé pour la transmission de données et/ou la détermination de la position relative du véhicule par rapport à l'enroulement primaire et l'enroulement supplémentaire (4) n'est pas utilisé pour la transmission de données lorsque l'enroulement primaire (1) n'est pas alimenté,
dans lequel l'enroulement supplémentaire (4) est utilisé pour la transmission de données et l'enroulement (3) n'est pas utilisé pour la transmission de données lorsque l'enroulement primaire (1) est alimenté.

7. Procédé selon la revendication 6,
**caractérisé en ce que**,
lorsque l'enroulement primaire n'est pas alimenté, un autre enroulement (2) disposé parallèlement à l'enroulement primaire et composé de deux enroulements partiels enroulés en sens opposés est utilisé pour la transmission de données et/ou la détermination de la position relative du véhicule par rapport à l'enroulement primaire, en particulier dans lequel la quantité de surface de chevauchement de la projection verticale de chaque enroulement partiel de l'enroulement supplémentaire (2) dans le plan de l'enroulement primaire avec le premier enroulement partiel de l'enroulement primaire est égale en valeur absolue à la quantité de surface de chevauchement de la projection verticale de cet enroulement partiel respectif de l'autre enroulement (2) dans le plan de l'enroulement primaire avec le deuxième enroulement partiel de l'enroulement primaire,
en particulier dans lequel l'autre enroulement (2) est tourné de 90° par rapport à l'enroulement (3),
en particulier dans lequel cet autre enroulement (2) peut également être utilisé pour la transmission de données lorsque l'enroulement primaire est alimenté.

8. Procédé selon la revendication 6 ou 7,
**caractérisé en ce que**
l'enroulement supplémentaire (4) est réalisé sous la forme d'une bobine rectangulaire.

9. Système conçu pour mettre en œuvre un procédé selon l'une des revendications 1 à 5,
**caractérisé en ce que**
le dispositif de commutation est conçu de telle sorte que, lorsque l'enroulement primaire est alimenté, le dispositif de commutation présente une première position de commutation et que, lorsque l'enroulement primaire n'est pas alimenté, le dispositif de commutation présente une autre position de commutation.
